# EUROPÄISCHE PATENTANMELDUNG

(11) **EP 2 348 270 A2**
(43) Veröffentlichungstag der Anmeldung: **27.07.2011**
(21) Anmeldenummer: 11151120.0
(22) Anmeldetag: 17.01.2011
(51) Int. Cl.: F27B 7/34, F27D 17/00

(54) **System zur Wärmerückgewinnung an einem Drehrohrofen**

(30) Priorität: 20.01.2010 DE 102010001055
(71) Anmelder: Benninghoven GmbH & Co.KG Mülheim, 54486 Mülheim / Mosel (DE)
(72) Erfinder: Wagner, Frank, 54518 Bergweiler (DE)
(74) Vertreter: Rau, Schneck & Hübner

(57) **Zusammenfassung**

Ein System zur Wärmerückgewinnung an einem Drehrohrofen umfasst eine Heiz-Vorrichtung (3) zur Anbringung an dem Drehrohrofen (1) und einen mit der Heiz-Vorrichtung (3) verbundenen Schalldämpfer (4) zur Schalldämmung von Ansauggeräuschen der Heiz-Vorrichtung (3), wobei der Schalldämpfer (4) mindestens eine Dämpfer-Einlass-Öffnung (44, 45) zum Ansaugen erwärmter Umgebungsluft aufweist.

## Beschreibung

Die Erfindung betrifft ein System zur Wärmerückgewinnung an einem Drehrohrofen, einen Drehrohrofen mit einem derartigen System sowie ein Verfahren zur Wärmerückgewinnung an einem derartigen Drehrohrofen.

Drehrohröfen werden für kontinuierliche Prozesse in der Verfahrenstechnik eingesetzt und sind in der Anwendung seit langem bekannt. Beispielsweise werden Drehrohröfen bei der Herstellung von Asphalt zur Trocknung und/oder Erwärmung von feuchtem Material eingesetzt. Drehrohröfen sind im allgemeinem trommelförmig gestaltet und um eine Mittel-Längs-Achse drehbar und werden deshalb auch als Trockentrommeln bezeichnet. In Abhängigkeit des in dem Drehrohrofen durchzuführenden Trocknungsprozesses kann die Prozesstemperatur im Inneren des Drehrohrofens variieren, wobei die Temperatur an den Seitenwänden des Drehrohrofens, insbesondere der Stirnwände, bis zu 300 °C betragen kann. Es ist nachteilig, dass die in den Wänden des Drehrohrofens gespeicherte Energie an die Umgebung abgestrahlt wird und damit verloren ist.

Der Erfindung liegt die Aufgabe zugrunde, ein System zur Wärmerückgewinnung an einem Drehrohrofen zu schaffen, um während eines mit dem Drehrohrofen durchgeführten Herstellungsprozesses erzeugte Wärme für die Prozessführung zu nutzen.

Diese Aufgabe wird durch die Merkmale der Ansprüche 1 und 15 gelöst. Der Kern der Erfindung liegt darin, einen Schalldämpfer für eine Heiz-Vorrichtung an einer Stirnwand des Drehrohrofens derart zu gestalten, dass von der Stirnwand abgestrahlte Wärme zum Vorheizen von durch den Schalldämpfer eingesaugter Luft genutzt werden kann. Dazu ist die zur Erwärmung des Drehrohrofens genutzte Heiz-Vorrichtung an der Stirnwand des Drehrohrofens angebracht. Der Schalldämpfer ist mit der Heiz-Vorrichtung verbunden und weist mindestens eine Dämpfer-Einlass-Öffnung zum Eintritt von Sauerstoff, der zur Verbrennung von Brennstoffen in einem Brenner der Heiz-Vorrichtung benötigt wird. Der Schalldämpfer kann insbesondere zwei Dämpfer-Einlass-Öffnungen aufweisen, die jeweils oberhalb und unterhalb eines Grundkörpers der Heiz-Vorrichtung angeordnet sind, um den Betrag der zurück gewonnenen Wärme über die eingesaugte Luft zu erhöhen. Weiterhin ist es vorteilhaft, die mindestens eine Dämpfer-Einlass-Öffnung der Stirnwand des Drehrohrofens zuzuwenden, um damit eine Effizienzsteigerung der Wärmeausbeute zusätzlich zu erhöhen.

Weitere vorteilhafte Ausgestaltungen der Erfindung ergeben sich aus den Unteransprüchen.

Zusätzliche Merkmale und Einzelheiten der Erfindung ergeben sich aus der nachfolgenden Beschreibung eines Ausführungsbeispiels anhand der Zeichnung. Es zeigen:
- Fig. 1: eine Seitenansicht einer Anordnung mit einem angetriebenen Drehrohrofen, einer damit verbundenen Wärme-Abführ-Vorrichtung und einem erfindungsgemäßen System zur Wärmerückgewinnung an dem Drehrohrofen,
- Fig. 2: einen vergrößerten Ausschnitt einer Seitenansicht des an dem Drehrohofen angebrachten erfindungsgemäßen Systems,
- Fig. 3: eine Figur 2 entsprechende Draufsicht der erfindungsgemäβen Anordnung,
- Fig. 4: einen Längsschnitt gemäß der Schnittlinie IV-IV in Figur 3,
- Fig. 5: einen Querschnitt gemäß der Schnittlinie V-V in Figur 2 und
- Fig. 6: eine Schnittdarstellung entsprechend der Schnittlinie VI-VI in Figur 1.

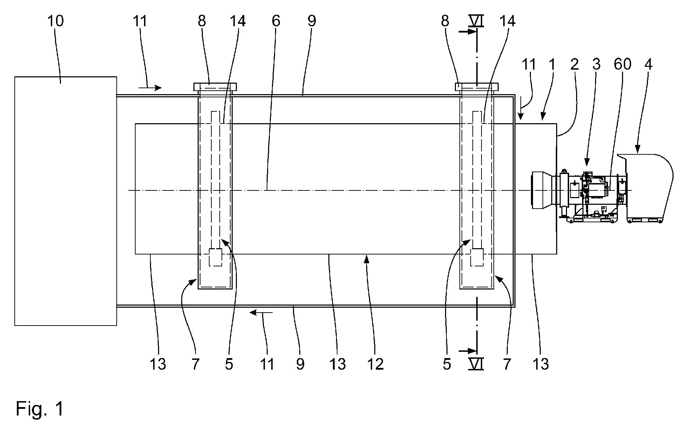

Eine in Figur 1 dargestellte Gesamtanordnung zeigt einen Drehrohrofen 1, eine an einer Stirnwand 2 des Drehrohrofens 1 angebrachte Heiz-Vorrichtung 3 zur Erwärmung des Drehrohrofens 1 und einen mit der Heiz-Vorrichtung 3 verbundenen Schalldämpfer 4. Dabei umfasst das erfindungsgemäße System zur Wärmerückgewinnung an dem Drehrohrofen 1 die Heiz-Vorrichtung 3 und den Schalldämpfer 4.

Weiterhin sind zwei Antriebs-/Lager-Vorrichtungen 5 zum drehbaren Antreiben des Drehrohrofens 1 um eine Mittel-Längs-Achse 6 vorgesehen. Die Antriebs-/Lager-Vorrichtungen 5 sind jeweils von einer Antriebs-/ Lager-Abdeckung 7 zur Wärmegewinnung von in dem Bereich der auf dem Drehrohrofen 1 montierten Antriebs-/Lager-Vorrichtungen 5 abgegebener Wärme des Drehrohrofens 1 abgedeckt. In jeder Antriebs-/Lager-Abdeckung 7 ist jeweils eine Wärme-Abführ-Vorrichtung in Form eines Wärmetauschers 8 integriert. Die Wärmetauscher 8 sind jeweils in einem oberen, einem Untergrund, auf welchem der Drehrohrofen 1 gelagert ist, gegenüberliegenden Bereich der Antriebs-/Lager-Abdeckung 7 angeordnet. Die Wärmetauscher 8 sind durch eine Wärmeträger-Leitung 9 miteinander verbunden und mittels der Wärmeträger-Leitung 9 an einen Wärmespeicher 10 angeschlossen. Ausgehend von dem Wärmespeicher 10 kann ein Wärmeträger-Medium wie beispielsweise Wasser in einer Kreislauf-Richtung 11 durch die Wärmetauscher 8 in den Antriebs-/Lager-Abdeckungen 7 strömen und wird anschließend entlang der Kreislauf-Richtung 11 in den Wärmespeicher 10 zurückgeführt.

Der Drehrohrofen 1 weist einen zur Mittel-Längs-Achse 6 rotationssymmetrischen Trommelkörper 12 auf. Entlang der Mittel-Längs-Achse 6 hat der Trommelkörper 12 abwechselnd Isolier-Abschnitte 13 und Antriebs-/ Lager-Abschnitte 14. An einem vorderen, an die Stirnwand 2 des Drehrohrofens 1 anschließenden Bereich des Trommelkörpers 12 ist ein erster Isolier-Abschnitt 13 angeordnet, in dem der Trommelkörper 12 eine nicht dargestellte Wärmeisolierung in Form einer Isolierschicht aufweist. Die Antriebs-/Lager-Abdeckung 7 ist in dem Antriebsabschnitt 14 vorgesehen, in welchem der Trommelkörper 12 des Drehrohrofens 1 keine Wärmeisolierung aufweist. Entlang der Mittel-Längs-Achse 6 schließt sich an die Antriebs-/Lager-Abdeckung 7 ein weiterer, identischer Isolier-Abschnitt 13 und an diesem anschießend die zweite Antriebs-/Lager-Abdeckung 7 an, wobei der Trommelkörper 12 von einem weiteren Isolier-Abschnitt 13 abgeschlossen ist.

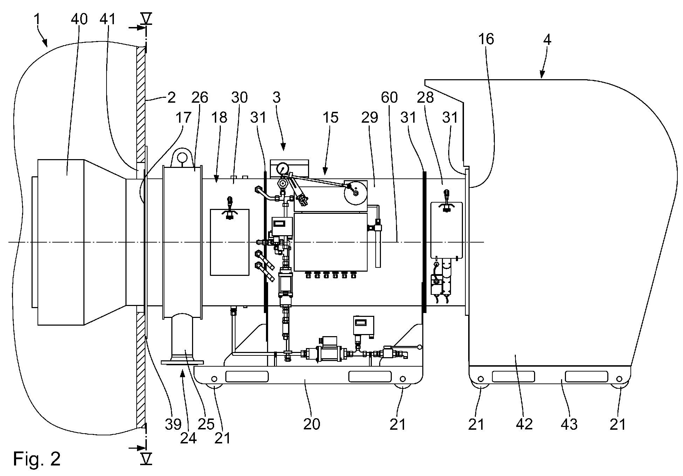

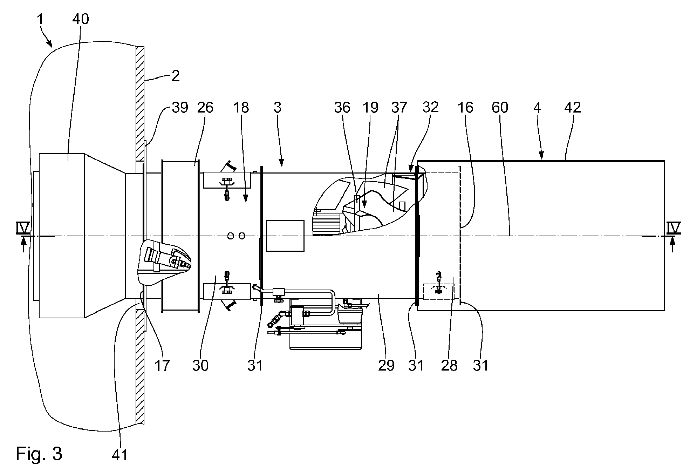

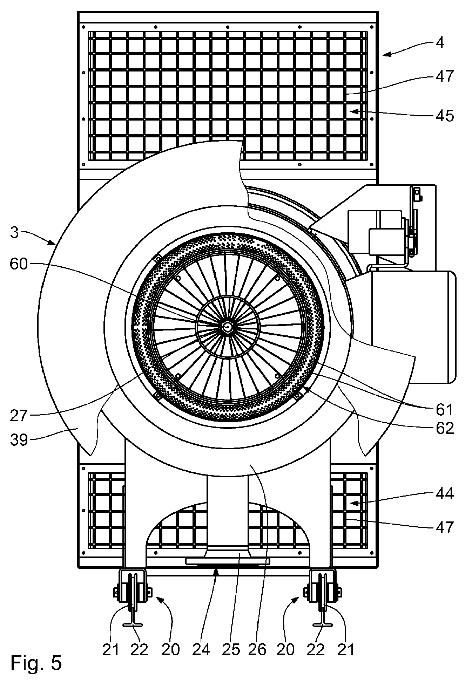

Im Folgenden wird anhand der Figuren 2 bis 5 das erfindungsgemäße System zur Wärmerückgewinnung an dem Drehrohrofen 1 näher beschrieben. Die Heiz-Vorrichtung 3 weist einen Grundkörper 15 mit einer zu der Mittel-Längs-Achse 6 parallel angeordneten Längs-Achse 60, mit einer Grundkörper-Einlass-Öffnung 16 und einer Grundkörper-Auslass-Öffnung 17, einen in dem Grundkörper 15 angeordneten Brenner 18 und einen in dem Grundkörper 15 angeordneten Brenner-Ventilator 19 sowie einen fest mit dem Grundkörper 15 verbundenen Unterwagen 20 auf. Der Unterwagen 20 weist mehrere drehbar gelagerte Drehrollen 21 auf, mittels derer die Heiz-Vorrichtung 3 entlang der Längs-Achse 60 verschiebbar ist. Wie in Figur 5 dargestellt, kann dazu ein Schienensystem 22 verwendet werden. Grundsätzlich ist es auch möglich, den Unterwagen 20 mit Rädern für andere Untergrundarten auszustatten.

Weiterhin weist die Heiz-Vorrichtung 3 eine nicht dargestellte Regeleinrichtung auf, die sowohl mit dem Brenner 18 als auch mit dem Brenner-Ventilator 19 verbunden ist, um eine Temperatur von dem Brenner 18 abgegebener Wärme zu regeln. Damit kann eine in dem Drehrohrofen 1 einzustellende Temperatur geregelt werden. Dazu ist weiterhin eine nicht dargestellte Verbindung der Regeleinrichtung 23 mit einer innerhalb des Drehrohrofens 1 angebrachten Temperatur-Messeinrichtung zur Erfassung einer Ist-Temperatur in dem Drehrohrofen 1 vorgesehen. Die Verbindung zu der Temperatur-Messeinrichtung im Drehrohrofen 1 kann auch entfallen, sodass die Regeleinrichtung 23 die Funktion einer Steuereinrichtung übernimmt und beispielsweise entsprechend einem vorgegebenen Temperatur-Zeit-Profil Wärme abgibt. Es ist außerdem möglich, dass die Wärme-Einrichtung 23 entweder mit dem Brenner 18 oder mit dem Brenner-Ventilator 19 und nicht mit beiden Komponenten gleichzeitig verbunden ist.

Der Brenner 18 gemäß dem gezeigten Ausführungsbeispiel ist ein so genannter Zweistoff-Brenner, der sowohl mit flüssigem Brennstoff wie beispielsweise Öl als auch mit gasförmigem Brennstoff wie beispielsweise Erdgas betrieben werden kann. Deshalb ist eine Gas-Zuführ-Einheit 24 vorgesehen, die ein nach unten zum dem Unterwagen 20 gerichtetes, offenes Gas-Anschluss-Rohr 25 aufweist. Über einen Gas-Verteilerring 26, an dessen dem Drehrohrofen 1 zugewandter Stirnseite ein eine Vielzahl von kleinen Gas-Austrittslöchern 61 aufweisender Gas-Austrittsring 62 vorgesehen ist, wird der gasförmige Brennstoff zugeführt. Die Zuführung des flüssigen Brennstoffs erfolgt in dem gezeigten Ausführungsbeispiel durch eine Düse 27. Die Düse 27 und der Gas-Verteilerring 26 sind konzentrisch zur Längs-Achse 60 angeordnet. Es ist auch möglich, einen Brenner zu verwenden, der mit festen, flüssigen und /oder gasförmigen Medien betrieben wird.

Der Grundkörper 15 ist mehrteilig aufgebaut und umfasst drei hintereinander angeordnete Rohr-Abschnitte, wobei ein erster Rohr-Abschnitt 28 dem Schalldämpfer 4 zugewandt ist, ein zweiter Rohr-Abschnitt 29 entlang der Längs-Achse 60 an den ersten Rohr-Abschnitt 28 anschließt und wiederum ein dritter Rohr-Abschnitt 30 ebenfalls entlang der Längs-Achse 60 an den zweiten Rohr-Abschnitt 29 anschließt und der Stirnwand 2 des Drehrohrofens 1 zugewandt ist. Die benachbarten Rohr-Abschnitte 28 und 29 bzw. 29 und 30 sind jeweils mittels einer Flansch-Verbindung 31 durch Schrauben fest, aber lösbar miteinander verbunden. Es ist auch möglich, dass die benachbarten Rohr-Abschnitte 28 und 29 bzw. 29 und 30 an den Flansch-Verbindungen 31 miteinander verschweißt sind. Die drei Rohr-Abschnitte 28, 29 und 30 weisen jeweils identische Innen- und Außen-Durchmesser auf, sodass der Grundkörper 15 konstante Innen- und Außen-Durchmesser entlang der Längs-Achse 60 aufweist.

An dem ersten Rohr-Abschnitt 28 ist die Grundkörper-Einlass-Öffnung 16 dem Schalldämpfer 4 zugewandt angeordnet, wobei der erste Rohr-Abschnitt 28 mit einer weiteren Flansch-Verbindung 31 an dem Schalldämpfer 4 befestigt ist. An dem Übergang von dem ersten Rohr-Abschnitt 28 zu dem zweiten Rohr-Abschnitt 29 ist ein Luftführungs-Element 32 vorgesehen, das konzentrisch zur Längs-Achse 60 angeordnet ist und entlang dieser einen veränderlichen Querschnitt aufweist, wobei ein Einlass-Querschnitt 33 und ein Auslass-Querschnitt 34 im Wesentlichem gleich groß und damit maximal sind. Zwischen dem Einlass-Querschnitt 33 und dem Auslass-Querschnitt 34 ist ein Übergangs-Querschnitt 35 angeordnet, der entlang der Längs-Achse 60 an der Flansch-Verbindung 31 vorgesehen ist, die den ersten Rohr-Abschnitt 28 mit dem zweiten Rohr-Abschnitt 29 verbindet. An dem Übergangs-Querschnitt 35 weist das Luftführungs-Element 32 den geringsten Durchmesser auf. Das Luftführungs-Element 32 dient der Verbesserung der Strömungsbedingungen innerhalb des Grundkörpers 15.

In dem zweiten Rohr-Abschnitt 29 des Grundkörpers 15 ist der Brenner-Ventilator 19 angeordnet, der mehrere identische, entlang des Umfangs eines Ventilatorrings 36 angeordnete, nicht eben ausgebildete Schaufelräder 37 aufweist.

In dem dritten Rohr-Abschnitt 30 ist der Brenner 18 angeordnet. Weiterhin weist der dritte Rohr-Abschnitt 30 die Grundkörper-Auslass-Öffnung 17 auf, die der Stirnwand 2 des Drehrohrofens 1 zugewandt ist. An einer äußeren Mantelfläche 38 des dritten Rohr-Abschnitts 30 ist benachbart zu dem Gas-Verteilerring 26 der Gas-Zuführ-Einheit 24 eine ringförmige Scheibe 39 befestigt. Die Scheibe 39 dient als Flansch zur Befestigung des Grundkörpers 15 an der Stirnwand 2 sowie zur Befestigung eines trichterförmigen Feuerungs-Abschnitts 40, der innerhalb des Drehrohrofens 1 angeordnet ist, an dem Grundkörper 15. Die Scheibe 39 ist fest mit der Stirnwand 2 des Drehrohrofens 1 verbunden und dient als abschirmende Isolierung einer zur Anbindung der Heiz-Vorrichtung 3 notwendigen Öffnung 41 in der Stirnwand 2. Die Stirnwand 2 ist ortsfest und deshalb nicht drehfest mit dem um die Mittel-Längs-Achse 6 drehbaren Drehrohrofen 1 verbunden. Weiterhin ist die Stirnwand 2 fest mit der Heiz-Vorrichtung 3 verbunden. Dadurch wird gewährleistet, dass eine Rotationsbewegung des Drehrohrofens 1 gegenüber der ortsfesten Heiz-Vorrichtung 3 möglich ist.

Durch die trichterförmige Gestaltung des Feuerungs-Abschnitts 40 der Heiz-Vorrichtung 3 wird die Abgabe von Heißluft in den Drehrohrofen 1 verbessert. Dazu ist ein Querschnitt des Feuerungs-Abschnitts 40 im Vergleich zu dem Durchmesser des Grundkörpers 15 vergrößert.

Im Folgenden wird der Aufbau des Schalldämpfers 4 näher erläutert. Der Schalldämpfer 4 weist ein Dämpfer-Gehäuse 42 auf, das auf einen dem Unterwagen 20 ähnlichen Unterwagen 43 angeordnet ist. An dem Unterwagen 43 sind identische Drehrollen 21 zum Verlagern des Schalldämpfers 4 entlang der Längs-Achse 60 vorgesehen. Insbesondere rollt der Schalldämpfer 4 auf dem gleichen Schienensystem 22 wie die Heiz-Vorrichtung 3. Das Dämpfer-Gehäuse 42 weist eine unterhalb der Längs-Achse 60 benachbart zu dem Unterwagen 43 angeordnete erste Dämpfer-Einlass-Öffnung 44 und eine bezüglich der Längs-Achse 60 der ersten Dämpfer-Einlass-Öffnung 44 gegenüberliegend angeordnete zweite Dämpfer-Einlass-Öffnung 45 auf. Die Dämpfer-Einlass-Öffnungen 44, 45 sind senkrecht zur Längs-Achse 60 und damit parallel zur Stirnwand 2 des Drehrohrofens 1 orientiert. Die Dämpfer-Einlass-Öffnungen 44, 45 sind parallel zueinander angeordnet. Die Dämpfer-Einlass-Öffnungen 44, 45 sind in einer senkrecht zur Längs-Achse 60 orientierten Ebene oder mit einem geringen Abstand zueinander angeordnet. Die Dämpfer-Einlass-Öffnungen 44, 45 sind der Stirnwand 2 des Drehrohrofens 1 zugewandt und rechteckig ausgebildet.

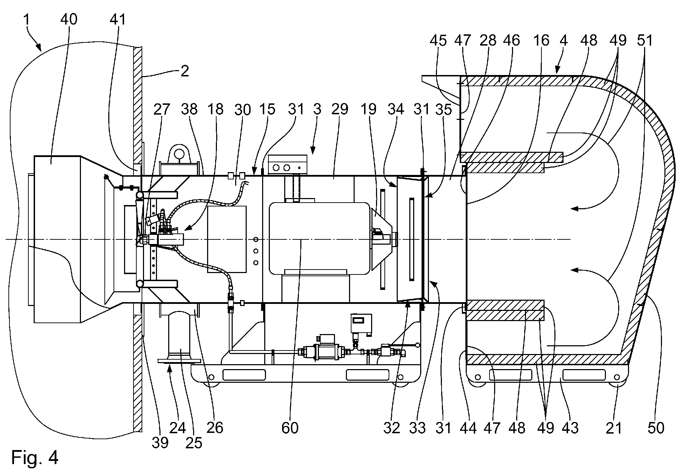

Weiterhin weist das Dämpfer-Gehäuse 42 eine Dämpfer-Auslass-Öffnung 46 auf, über die der Schalldämpfer 4 an der Grundkörper-Einlass-Öffnung 16 an der Heiz-Vorrichtung 3 angeordnet ist. Die Dämpfer-Auslass-Öffnung 46 ist rund ausgebildet und konzentrisch zur Längs-Achse 60 angeordnet. Ebenfalls sind die Grundkörper-Einlass-Öffnung 16 und die Grundkörper-Auslass-Öffnung 17 konzentrisch zu der Längs-Achse 60 angeordnet. Die Dämpfer-Auslass-Öffnung 46 und die Dämpfer-Einlass-Öffnungen 44, 45 sind bezüglich der Längs-Achse 60 derart parallel zueinander angeordnet, dass die Öffnungen 44, 45, 46 in einer zur Längs-Achse 60 senkrecht orientierten Ebene oder beabstandet zueinander angeordnet sind. Ein derartiger Abstand ist gering im Vergleich zu einem Strömungsweg, den Luft von einer Dämpfer-Einlass-Öffnung 44, 45 zu der Dämpfer-Auslass-Öffnung 46 zurücklegt. Der Abstand beträgt höchstens 5% der Länge des Strömungswegs, insbesondere höchstens 2% des Strömungswegs und insbesondere höchstens 1 % des Strömungswegs. An den Dämpfer-Einlass-Öffnungen 44, 45 ist jeweils ein Schutzgitter 47 angebracht, um eine Verschmutzung des Schalldämpfers 4 und der Heiz-Vorrichtung 3 mit den darin angeordneten Brenner 18 und Brenner-Ventilator 19 zu vermeiden. Weiterhin dienen die Schutzgitter 47 als Eingreifschutz. Zwischen den Dämpfer-Einlass-Öffnungen 44, 45 und der Dämpfer-Auslass-Öffnung 46 ist jeweils ein parallel zu der Längs-Achse 60 orientiertes Strömungs-Leitblech 48 angeordnet, das - ebenso wie alle Innenseiten von Außenwänden des Dämpfer-Gehäuses 42 - mit einer Schalldämmung 49 versehen sind. Eine der Stirnwand 2 gegenüberliegend angeordnete u-förmige Rückwand 50 des Dämpfer-Gehäuses 42 ist in der Art gestaltet, dass durch die Dämpfer-Einlass-Öffnungen 44, 45 eingesaugte Umgebungsluft entlang von Bogenrichtungen 51 insbesondere entlang einer 180°-Kehre strömen und den Schalldämpfer 4 über die Dämpfer-Auslass-Öffnung 46 wieder verlassen kann. Das bedeutet, dass ein über die Dämpfer-Einlass-Öffnungen 44, 45 eingesaugter Luftstrom parallel und entgegengesetzt zu einem über die Dämpfer-Auslass-Öffnung 46 austretenden Luftstrom orientiert ist. Der Schalldämpfer 4 ist derart ausgeführt, dass der eingesaugte Luftstrom der erwärmten Umgebungsluft umgelenkt wird, insbesondere um 180° bezüglich einer ursprünglichen Strömungsrichtung. Gemäß der Querschnittsdarstellung in Figur 4 ist der Schalldämpfer 4 W-förmig ausgeführt, wobei die Dämpfer-Auslass-Öffnung 46 mittig, also dem mittleren der drei W-Stege, und die Dämpfer-Einlass-Öffnungen 44, 45 jeweils au-βen, also den beiden äußeren W-Stegen zugeordnet sind. Durch diese Gestaltung der Rückwand sind die Strömungsbedingungen innerhalb des Schalldämpfers 4 weiter verbessert.

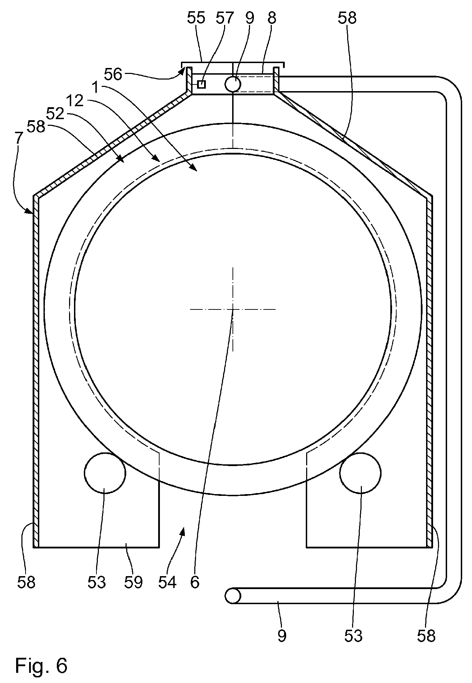

Im Folgenden wird anhand der Figuren 1 und 6 ein weiteres System zur Wärmerückgewinnung an den Drehrohrofen 1 beschrieben. Das System umfasst die beiden Antriebs-/Lager-Vorrichtungen 5, die jeweils in einem Antriebs-/Lager-Abschnitt 14 des Drehrohrofens 1 gelagert angeordnet sind, jeweils eine Antriebs-/Lager-Abdeckung 7 zur Abdeckung der Antriebs-/Lager-Vorrichtungen 5 und jeweils eine Wärme-Abführ-Vorrichtung 8 in Form eines Wärmetauschers zum Abführen von mittels der Antriebs-/Lager-Abdeckungen 7 zurück gewonnenen Wärme. Die Antriebs-/Lager-Vorrichtung 5 umfasst einen konzentrisch zum Drehrohrofen 1 angeordneten und mit dem Trommelkörper 12 verbundenen Laufring 52, der auf zwei Laufrollen 53 um die Mittel-Längs-Achse 6 drehbar gelagert ist. Zusätzlich ist es auch möglich, eine weitere, nicht dargestellte Antriebs-/Lager-Vorrichtung 5 in Form eines Kettenantriebs zum drehbaren Antreiben des Trommelkörpers 12 des Drehrohrofens 1 um die Mittel-Längs-Achse 6 vorgesehen sein. Dadurch, dass die Laufringe 52 bzw. ein Kettenrad des Kettenantriebs drehfest mit dem Drehrohrofen 1 verbunden sind, kann in den Antriebs-/Lager-Abschnitt 14 keine Wärmeisolierung angebracht werden. Die Antriebs-/Lager-Abschnitte 14 sind somit nicht wärmeisoliert.

Um die von dem Drehrohrofen 1 abgestrahlte Wärme nutzen zu können, ist die Antriebs-/Lager-Abdeckung 7 in Form eines sogenannten Lufthutzes vorgesehen. Der Lufthutz 7 ist eine wärmeisolierte Einhausung des Drehrohrofens 1 mit dem Laufring 52 und den Laufrollen 53 bzw. des Kettenantriebs in den Antriebs-/Lager-Abschnitten 14, wobei in einem unteren Bereich des Lufthutzes 7 eine Eintrittsöffnung 54 zum Lufteintritt von Umgebungsluft vorgesehen ist. Die Antriebs-/Lager-Vorrichtung 5 ist somit innerhalb der Antriebs-/Lager-Abdeckung 7 angeordnet.

In einem oberen Bereich ist der Lufthutz 7 trichterförmig ausgebildet und weist einen verjüngten Abschnitt auf, innerhalb dessen der Wärmetauscher 8 angeordnet ist. Der verjüngte Bereich ist durch einen Deckel 55 abgedeckt, wobei zwischen dem Deckel 55 und dem oberen Bereich des Lufthutzes 7 eine Austrittsöffnung 56 zum Luftaustritt an die Umgebung vorgesehen ist. Innerhalb des Wärmetauschers 8 ist zudem ein Temperaturfühler 57 zur Erfassung der Temperatur in dem Wärmetauscher 8 angeordnet. Der Temperaturfühler 57 ist mit einer nicht dargestellten Steuerungseinrichtung verbunden, die in Abhängigkeit der erfassten Ist-Temperatur im Wärmetauscher 8 diesen zu- oder abschaltet.

Der Lufthutz 7 weist Seitenwände 58 zur Einhausung einer äußeren Mantelfläche des Laufrings 52 und der Laufrollen 53 und darüber hinaus zwei mit den Seitenwänden 58 verbundene Stirnwände 59 auf, die eine thermische Abschirmung der Antriebs-/Lager-Vorrichtung 5 entlang der Mittel-Längs-Achse 6 gewährleisten. Der Lufthutz 7 ist an den Stirnwänden 59 mit der Wärmeisolierung der angrenzenden Isolier-Abschnitte 13 verbunden, sodass eine durchgängige Wärmeisolierung des Drehrohrofens 1 gegeben ist.

Die Antriebs-/Lager-Abdeckung 7 ist im Bereich des Wärmetauschers 8 mit der Wärmeträger-Leitung 9 verbunden, die eine Kreislaufleitung darstellt und über die die Antriebs-/Lager-Abdeckungen 7 an den Wärmespeicher 10 angebunden sind. Der Wärmespeicher 10 ist als Schichten-Wärmespeicher ausgeführt. Als Wärmetauscher 8 kann beispielsweise ein handelsüblicher Kühler eines Lastkraftwagens eingesetzt werden. Der Wärmetauscher 8 ist also ebenfalls innerhalb der Antriebs-/Lager-Abdeckung 7 angeordnet.

Durch die Verwendung des Lufthutzes 7 kann in dem Antriebs-/Lager-Abschnitt 14 auf den aus sicherheitstechnischen Gründen üblicherweise notwendigen, separaten Eingreifschutz für den Laufring 52 oder einen alternativen Kettenantrieb entfallen.

Im Folgenden wird anhand der Figuren 1 bis 5 das erfindungsgemäße Verfahren zur Wärmerückgewinnung an dem Drehrohrofen 1 näher beschrieben. Zur Beheizung des Drehrohrofens 1 wird die Heiz-Vorrichtung 3 mit dem Brenner 18 eingesetzt. Zur Verbrennung in dem Brenner 18 wird Sauerstoff benötigt, welcher über den Brenner-Ventilator 19 aus der Umgebungsluft zugeführt wird. Zur Reduzierung von Ansauggeräuschen, die durch den Brenner-Ventilator 19 erzeugt werden und über 100 dB betragen können, wird der Schalldämpfer 4 eingesetzt.

Die Heiz-Vorrichtung 3 mit dem Brenner 18 ist gemäß dem gezeigten Ausführungsbeispiel konzentrisch zur Mittel-Längs-Achse 6 des Drehrohrofens 1 an dessen Stirnwand 2 angebracht. In diesem Fall sind die Mittel-Längs-Achse 6 und die Längs-Achse 60 der Heiz-Vorrichtung 3 identisch. Es ist aber auch möglich, die Heiz-Vorrichtung 3 bezogen auf den Drehrohrofen 1 außermittig anzuordnen, wobei die Mittel-Längs-Achse 6 und die Längs-Achse 60 parallel zueinander angeordnet sind. Während des Betriebs des Drehrohrofens 1 kann die Stirnwand 2 auf über 300 °C erwärmt werden. Die Wärmeenergie wird über die Stirnwand 2 an die Umgebung abgestrahlt, sodass im Bereich der Stirnwand 2 die Luft gegenüber der anderen Umgebungsluft um etwa 30 °C erwärmt ist.

Durch die erfindungsgemäße Gestaltung des Schalldämpfers 4, bei dem die Dämpfer-Einlass-Öffnungen 44, 45 der Stirnwand 2 des Drehrohrofens 1 zugewandt sind, wird die von der Stirnwand 2 abgestrahlte Wärme an die Umgebungsluft in der Form genutzt, dass die erwärmte Umgebungsluft im Bereich zwischen der Stirnwand 2 und den Dämpfer-Einlass-Öffnungen 44, 45 eingesaugt und über den Brenner-Ventilator 19 dem Brenner 18 zugeführt wird. Dadurch wird die erwärmte Luft über die Heiz-Vorrichtung 3 in den Drehrohrofen 1 zurückgeführt. Durch die Vorwärmung der Verbrennungsluft wird eine Steigerung des Feuerungswirkungsgrades des Brenners 18 erzielt und führt damit zu einer Brennstoffeinsparung von etwa 1,5%. In diesem Zusammenhang ist zu beachten, dass höhere Erwärmungen der Verbrennungsluft nicht unbegrenzt zu einer Steigerung der Brennstoffeinsparung führen, da mit zunehmender Temperatur der Verbrennungsluft deren Luftdichte abnimmt und dadurch das zur Verbrennung benötigte Luftvolumen ansteigt. Die Erwärmung der Verbrennungsluft auf etwa 30 °C hat sich als besonders vorteilhaft erwiesen.

Im Folgenden wird anhand der Figuren 1 und 6 ein weiteres Verfahren zur Wärmerückgewinnung an dem Drehrohrofen beschrieben. Durch die Verwendung der Lufthutze 7 ist es möglich, die im Bereich der Antriebs-/ Lager-Abschnitte 14 des Drehrohrofens 1 abgestrahlte Wärme aufzufangen. Innerhalb des Lufthutzes 7 steigt die erwärmte Luft nach oben, wo in einem oberen Bereich der Wärmetauscher 8 angeordnet ist. Dabei beträgt die Abstrahltemperatur des Drehrohrofens innerhalb des sogenannten Brenner-Nachbereichs, innerhalb dessen der in Figur 1 rechts dargestellte Lufthutz 7 angeordnet ist, bis zu 300 °C. Im Brenner-Fernbereich, wo der in Figur 1 links dargestellte Lufthutz 7 angeordnet ist, beträgt die Abstrahltemperatur des Drehrohrofens etwa 100 °C. Der Lufthutz 7 im Brenner-Nachbereich ist zu der Heiz-Vorrichtung 3 benachbart angeordnet, der andere Lufthutz 7 im Brenner-Fernbereich ist beabstandet zur Heiz-Vorrichtung 3 angeordnet. Durch den Temperaturfühler 57 wird die Ist-Temperatur im Wärmetauscher 8 erfasst und mit der Ist-Temperatur in dem Wärmespeicher 10 verglichen. Falls die Temperatur des Wärmetauschers 8 größer ist als die Temperatur in dem Wärmespeicher 10 wird der Wärmetauscher 8 aktiviert und die zurück gewonnene Wärme über die Wärmeträger-Leitung 9 dem Wärmespeicher 10 zugeführt. In der Wärmeträger-Leitung 9 wird als Wärmeträger-Medium bevorzugt Wasser eingesetzt. Es sind aber auch andere Wärmeträger-Medien, sowohl flüssig als auch gasförmig, denkbar.

In dem gezeigten Ausführungsbeispiel in Figur 1 sind zwei Antriebs-/ Lager-Abdeckungen 7 mit Wärmespeichern 8 vorgesehen. Es ist auch möglich, drei Antriebs-/Lager-Abdeckungen 7 mit jeweils einem Wärmespeicher 8 einzusetzen, wobei damit für den Drehrohrofen 1 eine Leistung von bis zu 50 kW erzielt werden kann.

Durch die Verwendung des Wärmespeichers 10 ist es möglich die zurück gewonnene Wärme zu speichern und je nach Bedarf für verschiedene Zwecke weiterzuverwenden.

## Patentansprüche

1. System zur Wärmerückgewinnung an einem Drehrohrofen umfassend
a. eine Heiz-Vorrichtung (3) zur Anbringung an dem Drehrohrofen (1) und
b. einen mit der Heiz-Vorrichtung (3) verbundenen Schalldämpfer (4) zur Schalldämmung von Ansauggeräuschen der Heiz-Vorrichtung (3),
c. wobei der Schalldämpfer (4) mindestens eine Dämpfer-Einlass-Öffnung (44, 45) zum Ansaugen erwärmter Umgebungsluft aufweist.

2. System gemäß Anspruch 1, **dadurch gekennzeichnet, dass** die Heiz-Vorrichtung (3) eine Längs-Achse (60) und einenkonzentrisch dazu angeordneten Grundkörper (15) mit einer Grundkörper-Einlass-Öffnung (16) und einer Grundkörper-Auslass-Öffnung (17) umfasst.

3. System gemäß Anspruch 2, **gekennzeichnet durch** einen in dem Grundkörper (15) angeordneten Brenner (18).

4. System gemäß Anspruch 2 oder 3, **gekennzeichnet durch** einen in dem Grundkörper (15) angeordneten Brenner-Ventilator (19).

5. System gemäß einem der Ansprüche 2 bis 4, **gekennzeichnet durch** eine mit dem Brenner (18) und/oder dem Brenner-Ventilator (19) verbundene Regeleinrichtung (23) zur Regelung einer Temperatur von dem Brenner (18) abgegebener Wärme.

6. System gemäß einem der Ansprüche 2 bis 5, **dadurch gekennzeichnet, dass** der Schalldämpfer (4) über eine Dämpfer-Auslass-Öffnung (46) an der Grundkörper-Einlass-Öffnung (16) der Heiz-Vorrichtung (3) angeordnet ist.

7. System gemäß Anspruch 6, **dadurch gekennzeichnet, dass** die Grundkörper-Einlass-Öffnung (16), die Grundkörper-Auslass-Öffnung (17) und die Dämpfer-Auslass-Öffnung (46) konzentrisch zur Längs-Achse (60) angeordnet sind.

8. System gemäß Anspruch 6 oder 7, **gekennzeichnet durch** ein Dämpfer-Gehäuse (42) mit einem zwischen der mindestens einen Dämpfer-Einlass-Öffnung (44, 45) und der Dämpfer-Auslass-Öffnung (46) angeordneten Strömungs-Leitblech (48).

9. System gemäß Anspruch 8, **dadurch gekennzeichnet, dass** Innenseiten von Außenwänden des Dämpfer-Gehäuses (42) mit einer Schalldämmung (49) versehen sind.

10. System gemäß Anspruch 8 oder 9, **dadurch gekennzeichnet, dass** das Strömungs-Leitblech (48) parallel zur Längs-Achse (60) orientiert ist.

11. System gemäß einem der vorangehenden Ansprüche, **dadurch gekennzeichnet, dass** die Heiz-Vorrichtung (3) und/oder der Schalldämpfer (4) entlang der Längs-Achse (60) verschiebbar, insbesondere auf einem Schienensystem (22), angeordnet sind.

12. System gemäß einem der vorangegangenen Ansprüche, **dadurch gekennzeichnet, dass** der Schalldämpfer (4) derart ausgeführt ist, dass ein Strom eingesaugter erwärmter Umgebungsluft in dem Schalldämpfer (4) umgelenkt wird, insbesondere um 180° bezüglich einer ursprünglichen Strömungsrichtung.

13. Drehrohrofen umfassend
a. eine Mittel-Längs-Achse (6),
b. eine Stirnwand (2) und
c. ein System gemäß einem der vorangehenden Ansprüche,
wobei die Mittel-Längs-Achse (6) und die Längs-Achse (60) parallel und insbesondere konzentrisch zueinander angeordnet sind.

14. Drehrohrofen gemäß Anspruch 13, **dadurch gekennzeichnet, dass** die mindestens eine Dämpfer-Einlass-Öffnung (44, 45) der Stirnwand (2) zugewandt ist.

15. Verfahren zur Wärmerückgewinnung an einem Drehrohrofen umfassend die Verfahrensschritte
a. Bereitstellen eines Drehrohrofens (1) gemäß Anspruch 13 oder 14,
b. Ansaugen von durch die Stirnwand (2) erwärmter Luft über die mindestens Dämpfer-Einlass-Öffnung (44, 45) und
c. Rückführen der erwärmten Luft über die Heiz-Vorrichtung (3) in den Drehrohrofen (1).
